# EUROPÄISCHE PATENTANMELDUNG

(11) **EP 4 160 194 A1**
(43) Veröffentlichungstag der Anmeldung: **05.04.2023**
(21) Anmeldenummer: 22198541.9
(22) Anmeldetag: 28.09.2022
(51) Int. Cl.: G01N 21/90

(54) **VERFAHREN UND VORRICHTUNG ZUR FEHLERINSPEKTION EINES HOHLGLASBEHÄLTNISSES**

(30) Priorität: 01.10.2021 DE 102021125540
(71) Anmelder: Heye International GmbH, 31683 Obernkirchen (DE)
(72) Erfinder: Kellner, Michael, 32105 Bad Salzuflen (DE)
(74) Vertreter: Michalski Hüttermann & Partner Patentanwälte mbB

(57) **Zusammenfassung**

Die Erfindung betrifft ein Verfahren und Vorrichtung zur Fehlerinspektion Hohlglasbehältnisses (6). Das Verfahren zur Fehlerinspektion eines Hohlglasbehältnisses (6) weist die folgenden Verfahrensschritte auf:
Beleuchten des Hohlglasbehältnisses (6) mit Licht,
Erfassen wenigstens eines Teils des von dem Hohlglasbehältnis (6) reflektierten Lichts in wenigstens zwei voneinander verschiedenen Polarisationsrichtungen, und
Auswerten des erfassten reflektierten Lichts in wenigstens einer der erfassten Polarisationsrichtungen.

Auf diese Weise wird eine einfache und verlässlich Möglichkeit geschaffen, von Fehlern in einem Hohlglasbehältnis (6) stammende Reflexionen gegenüber umgebendem oder überlagerndem Streulicht zu diskriminieren.

## Beschreibung

Die Erfindung betrifft ein Verfahren zur Fehlerinspektion eines Hohlglasbehältnisses, mit den Verfahrensschritten: Beleuchten des Hohlglasbehältnisses mit Licht, Erfassen wenigstens eines Teils des von dem Hohlglasbehältnis reflektierten Lichts und Auswerten des erfassten Lichts. Die Erfindung betrifft ferner eine Vorrichtung zur Fehlerinspektion eines Hohlglasbehältnisses, aufweisend: eine Beleuchtungseinrichtung zum Beleuchten des Hohlglasbehältnisses mit Licht, eine Erfassungseinrichtung zum Erfassen wenigstens eines Teils des von dem Hohlglasbehältnis reflektierten Lichts und eine Auswerteeinrichtung zum Auswerten des erfassten reflektierten Lichts.

Aus der Praxis ist es bekannt, bei der Herstellung von Hohlglasbehältnissen, wie Glasflaschen, die hergestellten Behältnisse unmittelbar im Anschluss an ihre Herstellung einer optischen Prüfung auf Objektfehler zu unterziehen. In diesem Zusammenhang sind optische Prüfverfahren in der Form von Durchlicht- bzw. von Reflexionsverfahren bekannt, bei denen sich das Hohlglasbehältnissen in einem Strahlengang befindet und wobei an Rissen und Einschlüssen innerhalb des Glaswerkstoffs oder auch an Oberflächenstrukturen reflektiertes Licht mittels einer Kamera empfangen und einer Auswertung zugeführt wird, welche dazu eingerichtet ist, die Art dieser Defekte genauer zu untersuchen.

In diesem Zusammenhang sind auch optische Prüfverfahren in Form einer Durchlichtanordnung bekannt, wobei sich das Hohlglasbehältnis in einem Strahlengang zwischen zwei Polarisationsfiltern befindet, deren Polarisationsebenen unter einem Winkel von π/2 zueinander stehen. Diese Anordnung ist dazu bestimmt, Spannungsbereiche innerhalb des Glaswerkstoffs zu erkennen, wobei der Strahlengang für den Fall, dass keine Spannungsbereiche vorliegen, im Wesentlichen lichtundurchlässig ist, und wobei eine Lichtdurchlässigkeit nur dann gegeben ist, wenn Spannungsbereiche vorliegen, die die Polarisationsebene des Lichtes drehen. Örtliche Spannungsbereiche innerhalb des Hohlglasbehältnisses können dessen mechanische Stabilität beeinträchtigen, so dass auf diese Weise ermittelte fehlerbehaftete Hohlglasbehältnisse ausgesondert werden können.

Beide Verfahrensvarianten führen unter Einsatz wenigstens einer Kamera zu der Erstellung wenigstens eines Bildes, regelmäßig jedoch von Bildfolgen, welche einen Teil des Umfangs oder eine sonstige Stelle des zu prüfenden Hohlglasbehältnissen abbilden, um das darauf folgende Auswerteverfahren durchführen zu können.

Bei der Prüfung reflektierender Fehler in Hohlglasbehältnissen gibt es jedoch Probleme derart, dass es nur schwer möglich ist, Reflexionen, die von Fehlern in den gezielt beleuchteten Bereichen der Hohlglasbehältnisse stammen (Fehlerreflexionen), von solchen Reflexionen zu trennen, die von Streulicht stammen, das die Fehlerreflexionen umgibt und/oder überlagert.

Davon ausgehend ist es die Aufgabe der Erfindung, eine einfache und verlässlich Möglichkeit zu schaffen, bei einem solchen Verfahren von Fehlern in einem Hohlglasbehältnis stammende Reflexionen gegenüber umgebendem oder überlagerndem Streulicht zu diskriminieren.

Diese Aufgabe wird durch die Gegenstände der unabhängigen Ansprüche gelöst. Bevorzugte Weiterbildungen finden sich in den Unteransprüchen.

Erfindungsgemäß wird also ein Verfahren zur Fehlerinspektion eines Hohlglasbehältnisses bereitgestellt, das die folgenden Verfahrensschritte aufweist:
Beleuchten des Hohlglasbehältnisses mit Licht,
Erfassen wenigstens eines Teils des von dem Hohlglasbehältnis reflektierten Lichts in wenigstens zwei voneinander verschiedenen Polarisationsrichtungen und
Auswerten des erfassten reflektierten Lichts in wenigstens einer der erfassten Polarisationsrichtungen.

Bei der vorliegenden Erfindung geht es im Wesentlichen darum, Risse in Hohlglasbehältnissen festzustellen. Ein Riss im Glas ist eine Bruchstelle, die das Reflexionsverhalten aufgrund eines schmalen Luftspalt ändert. Dieser Luftspalt wirkt wie ein Spiegel. Ein Riss im Prüfbereich, auf den das eingestrahlte Licht fällt, reflektiert also dieses Licht. Nach dem Brewsterschen Gesetz erfolgt eine vollständige Polarisation des an einer Oberfläche reflektierten Lichtes dann, wenn der Tangens des Einfallswinkels gleich der Brechzahl ist. Den betreffenden Winkel bezeichnet man als Polarisationswinkel oder als Brewster-Winkel. Doch auch wenn die Einstrahlung des Lichtes nicht genau unter dem Brewster-Winkel erfolgt, ist zumindest ein Teil des reflektierten Lichtes polarisiert. Mit anderen Worten: Auch wenn das eingestrahlte Licht nicht polarisiert ist, kommt es durch die Spiegelung an dem Riss, also durch die Reflexion, dazu, dass wenigstens ein Teil des reflektierten Lichts polarisiert ist und damit selektiv in der entsprechenden Polarisationsrichtung erfasst werden kann.

Die Erfindung nutzt insofern den Effekt aus, dass Streulicht und Oberflächenreflexionen des Lichtes in anderen Polarisationsrichtungen liegen als die Reflexionen, die von Fehlern, insbesondere von Rissen, in einem Hohlglasbehältnis ausgehen. Damit ist eine derartige Auswertung möglich, bei der aufgrund der unterschiedlichen Polarisationsrichtungen die Trennung der von dem Fehler ausgehenden Reflexionen von Streulicht und Oberflächenreflektionen möglich ist. Wenn vorliegend von "Polarisation" gesprochen wird, ist im Übrigen eine lineare Polarisation gemeint. Mit "Polarisationsrichtung" ist insofern die Polarisationsrichtung dieser linearen Polarisation gemeint, die mit einer Winkelangabe charakterisiert werden kann.

Das zuvor beschriebene Verfahren ist vorzugsweise verwendbar für Rissprüfungen, Mündungsprüfungen und auch für weitere Anwendungen zur Prüfung von reflektierenden Fehlern in Hohlglasbehältnissen oder an der Oberfläche von Hohlglasbehältnissen.

In dem Schritt des Auswertens des erfassten reflektierten Lichts in wenigstens einer der erfassten Polarisationsrichtungen wird vorzugsweise so vorgegangen, dass das Licht in der Polarisationsrichtung ausgewertet wird, die der Polarisationsrichtung der interessierenden Fehlerreflexionen entspricht. Darüber hinaus ist es freilich auch möglich, das Licht in weiteren Reflexionsrichtungen auszuwerten. Maßgeblich dabei ist jedoch, dass derartige Reflexionsrichtungen nicht in die Auswertung einfließen, die zu den störenden und nicht gewünschten Reflexionen gehören.

Gemäß einer bevorzugten Weiterbildung der Erfindung erfolgt im Rahmen des Auswertens des Lichtes die Erstellung eines Bildes, in das jedenfalls bestimmte Bildinformationen nicht eingeflossen sind, die einer erfassten Polarisationsrichtung oder mehrerer erfasster Polarisationsrichtungen entsprechen. Auf diese Weise ist es möglich, nicht gewünschtes Streulicht zu eliminieren, nämlich indem man für die Erstellung des Bildes solche Bildinformationen nicht berücksichtigt, die der Polarisationsrichtung der störenden Streustrahlung entsprechen. Es ist freilich auch möglich, in das erstellte Bild nur solche Bildinformationen einfließen zu lassen, die zu der Polarisationsrichtung gehören, die der Fehlerreflexion zuzuordnen ist.

Grundsätzlich wäre es dabei möglich, die voneinander verschiedenen Polarisationsrichtungen mit voneinander getrennten Komponenten der Erfassungseinrichtungen zu erfassen, wobei diese Komponenten jeweils für Licht mit einer entsprechenden Polarisationsrichtung geeignet sind. Gemäß einer bevorzugten Weiterbildung der Erfindung erfolgt das Erfassen des von dem Hohlglasbehältnis reflektierten Lichts jedoch mit einer derartigen Erfassungseinrichtung, mit der Licht gleichzeitig in den wenigstens zwei voneinander verschiedenen Polarisationsrichtungen erfassbar ist. Dies ermöglicht es, bereits durch die Aufnahme eines einzigen Bildes eine Auswertung in verschiedenen Polarisationsrichtungen durchzuführen.

Ganz besonders bevorzugt ist mit der Erfassungseinrichtung Licht in wenigstens vier voneinander verschiedenen Polarisationsrichtungen erfassbar. Wesentlich ist dabei vorerst nur, dass es sich tatsächlich um vier voneinander verschiedene Polarisationsrichtungen handelt. Vorzugsweise sind die Polarisationsrichtungen dabei aber um wenigstens 25°, weiter bevorzugt um wenigstens 35° und ganz besonders bevorzugt um jeweils 45° zueinander versetzt sind. In diesem ganz bevorzugten Fall würde es sich also z.B. um die Polarisationsrichtungen 0°, 45°, 90° und 135° handeln, die Polarisationsrichtung von 180° entspricht wieder der von 0°.

Grundsätzlich sind für das erfindungsgemäße Verfahren verschiedene Erfassungseinrichtung einsetzbar. Gemäß einer bevorzugten Weiterbildung der Erfindung gilt, dass die Erfassungseinrichtung dazu eingerichtet ist, die verschiedenen Polarisationseinrichtungen ortstreu zu erfassen.

Weiterhin ist es grundsätzlich möglich, das Hohlglasbehältnis auf unterschiedliche Weisen zu beleuchten. Gemäß einer bevorzugten Weiterbildung der Findung gilt jedoch, dass das das Verfahren zusätzlich die folgenden Verfahrensschritte aufweist:
Drehen des Hohlglasbehältnisses und
aufeinanderfolgendes Erfassen wenigstens eines Teils des von dem Hohlglasbehältnis reflektierten Lichts zu verschiedenen Drehorientierungen des Hohlglasbehältnisses.

Bei dieser Ausgestaltung der Erfindung werden die Komponenten zum Einstrahlen des Lichts und zum Erfassen des Lichts vorzugsweise nicht bewegt. Ein Drehen des Hohlglasbehältnisses kann z.B. mittels eines Drehtellers erfolgen. Dabei ist das Hohlglasbehältnis vorzugsweise zentral auf der Drehachse des Drehtellers positioniert.

Die Erfindung betrifft ferner eine Vorrichtung zur Fehlerinspektion eines Hohlglasbehältnisses, aufweisend:
eine Beleuchtungseinrichtung zum Beleuchten des Hohlglasbehältnisses mit Licht,
eine Erfassungseinrichtung, die zum Erfassen wenigstens eines Teils des von dem Hohlglasbehältnis reflektierten Lichts in wenigstens zwei voneinander verschiedenen Polarisationsrichtungen eingerichtet ist, und
eine Auswerteeinrichtung, die zum Auswerten des erfassten reflektierten Lichts in wenigstens einer erfassten Polarisationsrichtung eingerichtet ist.

Vorzugsweise ist die Auswerteeinrichtung zum Auswerten des erfassten reflektierten Lichts in mehreren der erfassten Polarisationsrichtung eingerichtet, ganz besonders bevorzugt in allen erfassten Polarisationsrichtungen.

Wie zuvor schon angesprochen, kann dabei als Erfassungseinrichtung ein Set aus mehreren voneinander separaten Komponenten verwendet werden, die jeweils zur Erfassung einer bestimmten Polarisationsrichtung eingerichtet sind. Vorzugsweise ist jedoch eine derartige Erfassungseinrichtung vorgesehen, mit der gleichzeitig Licht in wenigstens zwei voneinander verschiedenen Polarisationsrichtungen erfasst werden kann.

Bevorzugte Weiterbildungen der erfindungsgemäßen Vorrichtung ergeben sich in Analogie zu den weiter oben beschriebenen bevorzugten Weiterbildungen des erfindungsgemäßen Verfahrens.

In der Zeichnung zeigen
- Fig. 1: schematisch eine Vorrichtung zur Fehlerinspektion eines Hohlglasbehältnisses gemäß einem Ausführungsbeispiel der Erfindung,
- Fig. 2: schematisch die Polarisation von Licht bei Reflexion an einer Spiegel-fläche,
- Fig. 3a: schematisch ein Bild eines Hohlglasbehältnisses, in das alle Bildin-formationen aus dem erfassten reflektierten Licht eingeflossen sind, und
- Fig. 3b: schematisch ein Bild eines Hohlglasbehältnisses, in das nur die Bildin-formationen aus der Polarisationsrichtung eingeflossen sind, die der Polarisationsrichtung der Fehlerreflexion entspricht.

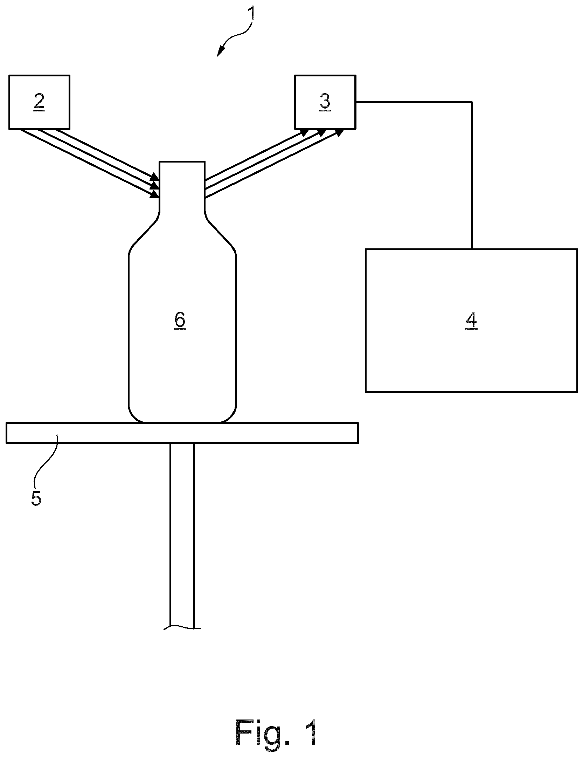

Fig. 1 zeigt schematisch eine Vorrichtung 1 zur Fehlerinspektion eines Hohlglasbehältnisses. Die Vorrichtung 1 weist eine Beleuchtungseinrichtung 2 auf, mit der ein auf einer Drehvorrichtung 5 positionierter Hohlglasbehältnisses 6 mit unpolarisiertem Licht beleuchtet wird. Vorliegend interessieren im Wesentlichen Fehler, nämlich Risse, im Mündungsbereich des Hohlglasbehältnisses 6, so dass mit der Beleuchtungseinrichtung 2 der Mündungsbereich des Hohlglasbehältnisses 6 beleuchtet wird.

Eine Erfassungseinrichtung 3 ist derart positioniert, dass sie wenigstens einen Teil des von dem Hohlglasbehältniss 6 reflektierten Lichts erfassen kann. Diese Erfassungseinrichtung 3 ist nun derart ausgestaltet, dass mit ihr das empfangene Licht in vier verschiedenen Polarisationsrichtungen empfangbar ist, die jeweils um einen Winkel von 45° zueinander versetzt sind. Konkret handelt es sich um die Polarisationsrichtungen 0°, 45°, 90° und 135°, die Polarisationsrichtung von 180° entspricht wieder der von 0°.

Der Erfassungseinrichtung 3 ist eine Auswerteeinrichtung 4 nachgeschaltet, die zum Auswerten des erfassten reflektierten Lichts in den vier zuvor genannten voneinander verschiedenen Polarisationsrichtungen eingerichtet ist. Mit der Erfassungseinrichtung 3 können insofern Bilder erhalten werden, die auf den Lichtanteil aus allen Polarisationsrichtungen, auf den Lichtanteil aus nur einem Teil der Polarisationsrichtungen oder auf den Lichtanteil aus nur einer einzigen Polarisationsrichtung zurückgehen.

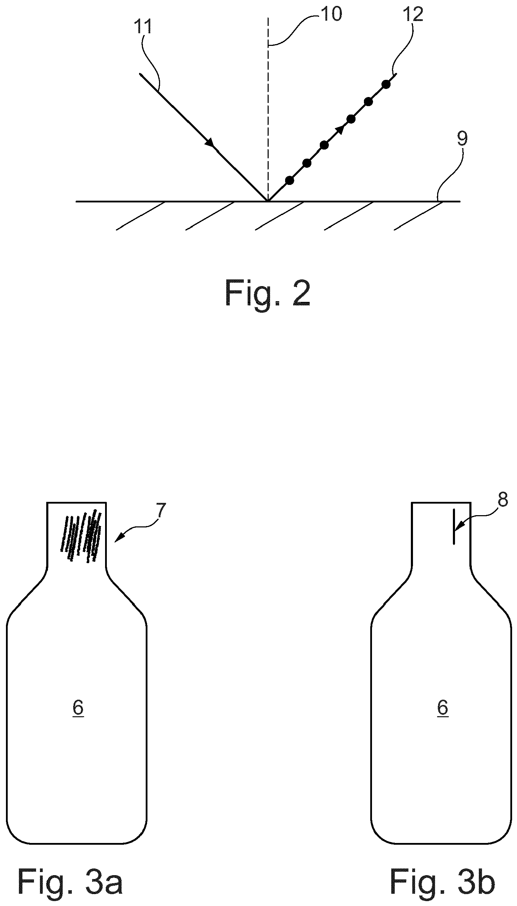

Die hier beschriebene Vorrichtung 1 zur Fehlerinspektion eines Hohlglasbehältnisses 6, dient im Wesentlichen dazu, Risse 6 im Hohlglasbehältnis festzustellen. Wie oben schon angesprochen, ist ein Riss im Glas eine Bruchstelle, die das Reflexionsverhalten aufgrund eines schmalen Luftspalt ändert und somit wie ein Spiegel wirkt. Ein Riss im Prüfbereich, auf den das eingestrahlte Licht fällt, reflektiert also dieses Licht, wobei, wie ebenfalls weiter oben angesprochen, zumindest ein Teil des reflektierten Lichtes polarisiert ist, auch wenn kein polarisiertes Licht eingestrahlt wird. Dies ist schematisch in Fig. 2 dargestellt: Unpolarisiertes Licht 11 trifft auf eine Reflexionsfläche 9 und wird mit einem gegenüber der Flächennormalen 10 gemessenen Ausfallswinkel, der dem ebenfalls gegenüber der Flächennormalen 10 gemessenen Einfallswinkel entspricht, als zumindest teilweise polarisiertes Licht 12 reflektiert, und zwar mit einer Polarisationsrichtung, die parallel zur Reflexionsfläche 9 steht.

Als Erfassungseinrichtung 3 kann z.B. eine Kamera des Herstellers Jai mit der Bezeichung GO-5100MP-USB verwendet werden. Diese Kamera ist mit einem Sensor des Typs IMX250MZR des Herstellers Sony ausgerüstet. Bei diesem Sensor handelt es sich um einen CMOS-Bildsensor mit einer Sensordiagonalen von 11,1 mm und einer Pixelgröße von jeweils 3,45 µm mit einem vierdirektionalen Polarisator, der auf der Fotodiode des Bildsensorchips ausgebildet ist. Zusätzlich zur Erfassung von Helligkeit und Farbe kann dieser Bildsensor daher auch Polarisationsinformationen erfassen, die von einem normalen Bildsensor nicht erkannt werden können. Dieser Polarisationssensor kann insofern ein Bild mit vier verschiedenen Polarisationsrichtungen in einer Aufnahme erfassen. Er kann dabei die Richtung und den Grad der Polarisation auf der Grundlage der Intensität jeder gerichteten Polarisation berechnen. Diese Polarisationsinformationen sind in Echtzeit erfassbar. Insgesamt wird damit die Möglichkeit geschaffen, Licht aus den verschiedenen Polarisationseinrichtungen gleichzeit und ortstreu mit einer einzigen Einrichtung zu erfassen.

Dabei ermöglicht dieser Sensor die Erzeugung unterschiedlicher Bilder. Zum einen sind Bilder erzeugbar, in denen der Grad der Polarisation dargestellt wird. Das heißt, dass Bereiche im Bild, die auf Licht mit einem hohen Polarisationsgrad zurückgehen, farblich anders dargestellt werden als Bereiche, die auf Licht mit einem niedrigen Polarisationsgrad zurückgehen. Außerdem sind mit Hilfe dieses Sensors Bilder erzeugbar, die mittels Farbkennung angeben, in welche Richtung das von einem jeweiligen Bereich stammende Licht polarisiert ist. Auf diese Weise können z.B. Spannungen in einem Hohlglasbehältnis ermittelt werden.

Für die vorliegende Erfindung ist jedoch die Funktionalität des Sensors relevant, gemäß der bestimmte Polarisationsrichtungen quasi ausgeblendet werden können. Mit anderen Worten: Für die vorliegende Erfindung nutzt man die Möglichkeit aus, Bilder zu erzeugen, die nur auf erfasstes Licht zurückgehen, das eine bestimmte Polarisationsrichtung hat. Vermeidet man in einem Bild insofern Bildinformationen, die eine Polarisationsrichtung aufweisen, die der Polarisationsrichtung des umgebenden oder überlagernden Streulichts entsprechen, wird es ermöglicht, von Fehlern in dem Hohlglasbehältnis stammende Reflexionen gegenüber Reflexionen zu diskriminieren, die von dem umgebenden oder überlagerndem Streulicht stammen. Verwendet man dabei ausschließlich die Polarisationsrichtung, die den von Fehlern in dem Hohlglasbehältnis stammende Reflexionen entspricht, erhält man die beste Diskriminierung der von dem Fehler stammenden Bildinformationen gegenüber Störinformationen. Vorliegend wird als der Effekt ausgenutzt, dass Streulicht und Oberflächenreflexionen des Lichtes in anderen Polarisationsrichtungen liegen als die Reflexionen, die von Fehlern, insbesondere von Rissen, in einem Hohlglasbehältnis 6 ausgehen.

Auf diese Weise erhältliche Bilder sind schematisch in den Fig. 3a und 3b gezeigt. Dabei ist in Fig. 3a schematisch ein Bild eines Hohlglasbehältnisses 6 gezeigt, in das alle Bildinformationen aus dem erfassten reflektierten Licht eingeflossen sind, während in Fig. 3b schematisch ein Bild eines Hohlglasbehältnisses 6 dargestellt ist, in das nur die Bildinformationen aus der Polarisationsrichtung eingeflossen sind, die der Polarisationsrichtung der Fehlerreflexion entspricht. Ermöglicht wird eine solche Darstellung dadurch, dass der hier verwendete Sensor über vier Bildkanäle verfügt, die jeweils einer anderen Polarisationsrichtung entsprechen. Während bei dem Bild aus Figur 3a, in das alle Bildinformationen aus allen Bildkanäle eingeflossen sind, im Bereich der Mündung des Hohlglasbehältnisses 6 nur ein großer, undefinierter Reflexionsbereich 7 zu sehen, ist zeigt das Bild aus Figur 3b nur eine einzige klar definierte Fehlerreflexion 8, die somit gegenüber den andere Reflexionen deutlich diskriminiert ist, da in das in Fig. 3b gezeigte Bild nur Informationen aus einem einzigen Bildkanal eingeflossen sind.

### Bezugszeichenliste

- 1: Vorrichtung zur Fehlerinspektion eines Hohlglasbehältnisses
- 2: Beleuchtungseinrichtung
- 3: Erfassungseinrichtung
- 4: Auswerteeinrichtung
- 5: Drehvorrichtung
- 6: Hohlglasbehältnis
- 7: undefinierter Reflexionsbereich
- 8: Fehlerreflexion
- 9: Reflexionsfläche
- 10: Flächennormale
- 11: unpolarisiertes einfallendes Licht
- 12: wenigstens teilweise polarisiertes ausfallendes Licht

## Patentansprüche

1. Verfahren zur Fehlerinspektion eines Hohlglasbehältnisses (6), mit den folgenden Verfahrensschritten:
Beleuchten des Hohlglasbehältnisses (6) mit Licht,
Erfassen wenigstens eines Teils des von dem Hohlglasbehältnis (6) reflektierten Lichts in wenigstens zwei voneinander verschiedenen Polarisationsrichtungen, und
Auswerten des erfassten reflektierten Lichts in wenigstens einer der erfassten Polarisationsrichtungen.

2. Verfahren nach Anspruch 1, wobei das reflektierte Licht in vier voneinander verschiedenen Polarisationsrichtungen erfasst wird.

3. Verfahren nach Anspruch 1 oder 2, wobei im Rahmen des Auswertens des erfassten reflektierten Lichts ein Bild des Hohlglasbehältnisses (6) erstellt wird, in das Bildinformationen aus wenigstens einer der erfassten Polarisationsrichtung nicht eingeflossen sind.

4. Verfahren nach einem der vorhergehenden Ansprüche, wobei die verschiedenen Polarisationseinrichtungen ortstreu erfasst werden.

5. Verfahren nach einem der vorhergehenden Ansprüche, wobei die verschiedenen Polarisationseinrichtungen gleichzeitig erfasst werden.

6. Verfahren nach einem der vorhergehenden Ansprüche, wobei das Verfahren zusätzlich die folgenden Verfahrensschritte aufweist:
Drehen des Hohlglasbehältnisses (6) und
aufeinanderfolgendes Erfassen wenigstens eines Teils des von dem Hohlglasbehältnis (6) reflektierten Lichts in verschiedenen Drehorientierungen des Hohlglasbehältnisses (6).

7. Vorrichtung zur Fehlerinspektion eines Hohlglasbehältnisses (6), aufweisend:
eine Beleuchtungseinrichtung (2) zum Beleuchten des Hohlglasbehältnisses (6) mit Licht,
eine Erfassungseinrichtung (3), die zum Erfassen wenigstens eines Teils des von dem Hohlglasbehältnis (6) reflektierten Lichts in wenigstens zwei voneinander verschiedenen Polarisationsrichtungen eingerichtet ist, und
eine Auswerteeinrichtung (4), die zum Auswerten des erfassten reflektierten Lichts in wenigstens einer der erfassten Polarisationsrichtungen eingerichtet ist.

8. Vorrichtung nach Anspruch 7, wobei mit der Erfassungseinrichtung (3) Licht in vier voneinander verschiedenen Polarisationsrichtungen erfassbar ist.

9. Vorrichtung nach Anspruch 7 oder 8, wobei die Erfassungseinrichtung (3) dazu eingerichtet ist, die verschiedenen Polarisationseinrichtungen ortstreu zu erfassen.

10. Vorrichtung nach einem der Ansprüche 7 bis 9, wobei die Erfassungseinrichtung (3) dazu eingerichtet ist, die verschiedenen Polarisationseinrichtungen gleichzeitig zu erfassen.
